# EUROPÄISCHE PATENTSCHRIFT

(11) **EP 0 498 913 B1**
(45) Veröffentlichungstag und Bekanntmachung des Hinweises auf die Patenterteilung: **06.09.1995**
(21) Anmeldenummer: 91102146.7
(22) Anmeldetag: 15.02.1991
(51) Int. Cl.: C02F 1/28, C02F 1/42, B01D 35/04

(54) **Haushaltswasserfilter**
Household water filter
Filtre à eau pour usage domestique

(43) Veröffentlichungstag der Anmeldung: 19.08.1992
(73) Patentinhaber: LEIFHEIT Aktiengesellschaft, D-56371 Nassau (DE)
(72) Erfinder: Friedrich, Rainer, W-5408 Naussau/Lahn (DE); Schülein, Rolf Günter, W-5409 Singhofen (DE)

(56) Entgegenhaltungen:
- EP-A- 0 235 315
- EP-A- 0 324 634
- GB-A- 2 197 647
- US-A- 3 744 639
- US-A- 4 764 274

## Beschreibung

Die Erfindung bezieht sich auf einen Haushaltswasserfilter gemäß dem Oberbegriff des Anspruchs 1.

Derartige Haushaltswasserfilter werden schon Jahrzehnte zur Verbesserung des Trinkwassers verwendet. Dabei werden in erster Linie die Karbonathärte verringert und unangenehme Geruchsstoffe wie zum Beispiel Chlor herausgefiltert.

Ein derartiger Wasserfilter ist durch die EP 02 35 315 bekannt. Bei diesem Haushaltswasserfilter wird eine Filterpatrone von unten in einen Trichter eingeschraubt. Desweiteren ist über den Einlaufbereich der Filterpatrone eine verstellbare Absperreinrichtung vorgesehen. Mit dieser Absperreinrichtung ist es auch möglich, eine mengenmäßige Regulierung des durch die Filterpatrone laufenden Wassers vorzunehmen. Nachteilig ist aber, daß durch diese Absperreinrichtung keine Steuerung der Verweildauer des zu filternden Wassers in der Filterpatrone möglich ist.

Zur Anpassung des Haushaltswasserfilters an die stark unterschiedlichen Karbonathärten des Trinkwassers ist es wünschenswert, die Verweildauer des zu filternden Wassers in der Filterpatrone zu steuern. Je länger das Wasser in der Filterpatrone verbleibt, desto höher ist der Enthärtungsgrad.

Aufgabe der Erfindung ist es, einen Haushaltswasserfilter zu schaffen, bei dem die Filterpatrone mit einer Absperreinrichtung versehen ist, die nicht nur eine mengenmäßige Regelung des Wasserstromes ermöglicht, sondern auch eine Regelung der Verweildauer des Wassers in der Filterpatrone gewährleistet. Desweiteren soll die Filterpatrone insbesondere bei der Ausführung als Einschraubpatrone in der Handhabung den ergonomischen Voraussetzungen angepaßt werden.

Diese Aufgabe wird mit den kennzeichnenden Merkmalen des Anspruchs 1 gelöst. Durch die Anordnung der Absperreinrichtung im Bodenbereich der Filterpatrone wird neben der mengenmäßigen Regulierung des Wasserflusses insbesondere die Verweildauer des Wassers in der Patrone beeinflußt. Dadurch kann der Wirkstoff der Filterpatronenfüllung länger auf das Wasser einwirken und eine bessere Dosierung erzielen. Diese Maßnahme bietet sich besonders bei der Behandlung von Wasser mit stark unterschiedlichen Härtegraden an. Dadurch wird insbesondere bei weniger hartem Wasser die Gebrauchsdauer der Filterpatrone deutlich verlängert.

Weitere Ausgestaltungen der Erfindung sind den Unteransprüchen zu entnehmen. So wird durch die schwimmend gelagerte Verzögerungsplatte eine weitere Intensivierung des Kontaktes zwischen durchströmendem Wasser und dem Filtermedium erreicht.

Um Bakterien am Filtergehäuse eine möglichst geringe Angriffsfläche zu bieten, wird dieses sehr glatt ausgeführt. Dabei ist es schwierig, die Filterpatrone, insbesondere nachdem sie gewässert wurde, einzuschrauben. Dies wird durch Greifmulden wesentlich erleichtert. Die Greifmulden können sowohl als stark ausgeprägte Mulden als auch als feine Rippen ausgebildet sein.

Je nach Ausführung des Schließteiles wird eine stufenlose Regelung der Durchflußgeschwindigkeit erreicht oder eine Stufenregelung.

Ein weiterer Vorteil ist dadurch gegeben, daß sowohl bei der Ausführung mit Sperrkegel als auch bei den dreh- und/oder steckbaren Varianten ein Feuchtigkeitssumpf am Boden der Filterpatrone vorgesehen wird. Dieser Feuchtigkeitssumpf hält das Filtermaterial, dem gesilberte Kohle beigemischt ist, feucht. Dies ist deshalb von großer Wichtigkeit, weil die keimtötende Wirkung des Silbers nur bei feuchtem Filtermedium eintritt.

Einige Ausführungsbeispiele der Erfindung sind im folgenden an Hand der Zeichnungen näher erläutert.

Es zeigen:
- Figur 1: eine Gesamtansicht eines Haushaltswasserfilter teilweise im Schnitt,
- Figur 2: eine Filterpatrone zur Hälfte im Schnitt,
- Figur 3: ein Schnitt gemäß der Linie III - III nach Figur 2,
- Figur 4: eine Ansicht gemäß der Richtung IV in Figur 2,
- Figur 5: eine Ansicht gemäß der Richtung V in Figur 2,
- Figur 6: eine Filterpatrone wie sie in dem Gerät nach Figur 1 eingesetzt ist,
- Figur 7: eine Ansicht gemäß der Richtung VII in Figur 6,
- Figur 8: ein Schnitt gemäß der Linie VIII - VIII in Figur 6,
- Figur 9: ein Schnitt gemäß der Linie IX - IX in Figur 6,
- Figur 10: eine weitere Alternativlösung einer Filterpatrone,
- Figur 11: eine Ansicht gemäß der Richtung XI in Figur 10,
- Figur 12: einen Schnitt gemäß der Linie XII - XII in Figur 10 und
- Figur 13: eine weitere Alternativlösung einer Filterpatrone.

Der Haushaltswasserfilter besteht im wesentlichen aus einem Trichterteil 1 mit angeformter Stegwand 2 und einer Bodenplatte 3. In das Trichterteil 1 ist ein Trichter 4 mit einer Aufnahme 5 für eine Filterpatrone 6 eingesetzt. Das Trichterteil 1 ist durch einen Klappdeckel 7 abgedeckt.

Zum Auffangen des gefilterten Wassers ist ein Auffangbehälter 8 vorgesehen.

Für die Filterpatrone 6 können unterschiedliche Ausführungsformen gewählt werden. Dies trifft besonders für die Absperreinrichtung 9 zu.

Die Filterpatrone 6 wird über die Aufnahme 5, die aus einer Gewindehülse 10 mit Innengewinde 11 besteht, eingeschraubt. Dazu ist die Filterpatrone 6 mit einem Gewindekragen 12 versehen. Der Gewindekragen 12 der Filterpatrone 6 setzt sich in einem Einlaufdom 13 mit Einlaufschlitze 14 fort.

Einlaufdom 13 und Gewindekragen 12 sind einstückig mit dem das Patronengehäuse 15 verschließenden Deckel 16 hergestellt. Der Deckel 16 ist im waagrechten Randbereich 17 mit Entlüftungsschlitzen 18 versehen. Die Anordnung der Entlüftungsschlitze 18 im Randbereich 17 bewirkt eine besonders gute Entlüftung. Durch den Einlauf des zu filternden Wassers über die Einlaufschlitze 14 im zentral angeordneten Einlaufdom 13 werden besonders gute Strömungsverhältnisse erreicht.

Die Absperreinrichtung 9 ist im Bodenbereich 19 der Filterpatrone 6 angeordnet.

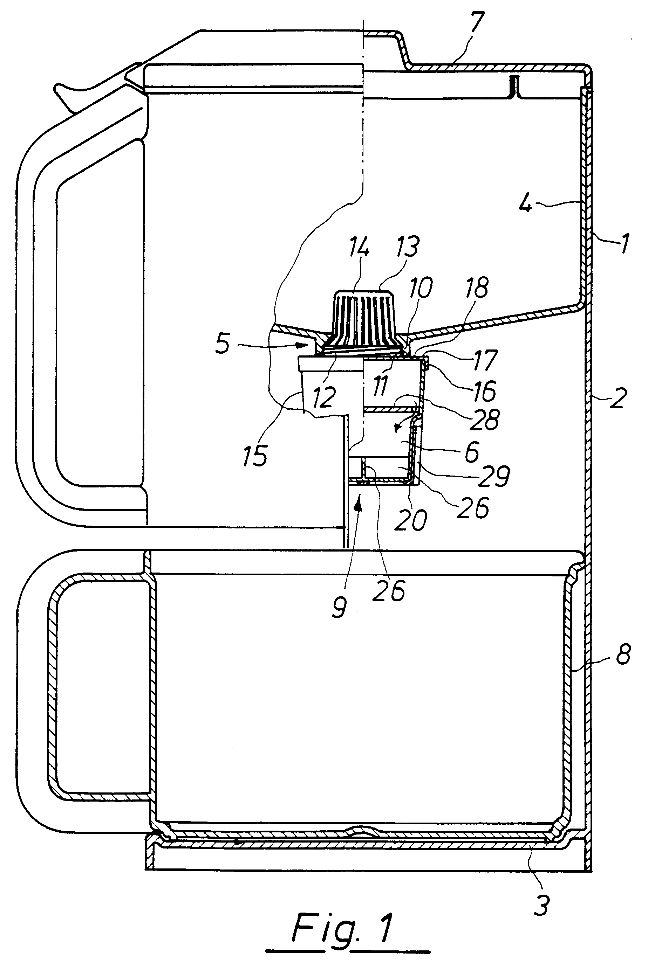

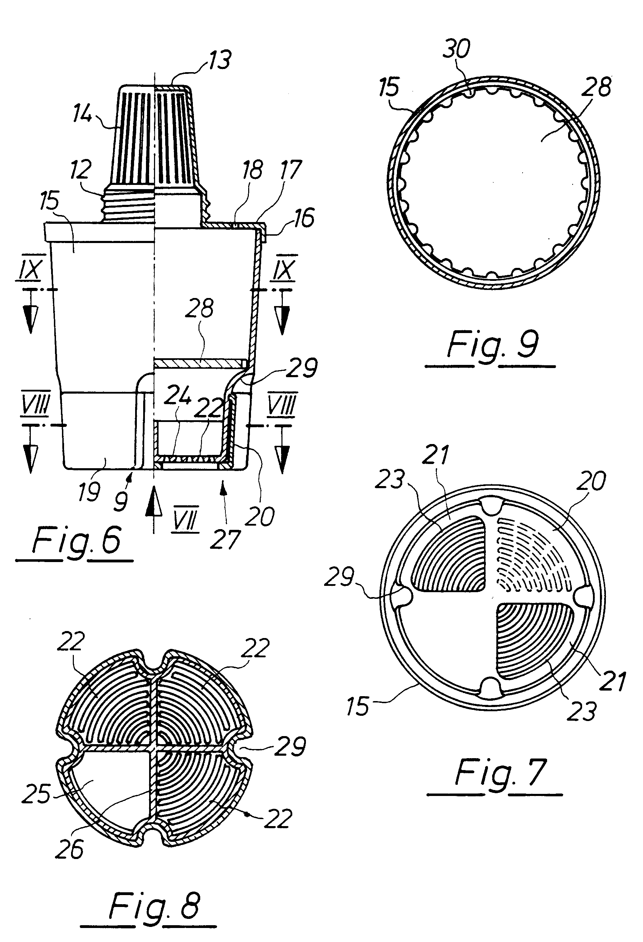

Dabei ist bei der Ausführungsform gemäß der Figuren 1, 6 bis 9 eine steckbare Kappe 20 vorgesehen. Diese Kappe 20 ist in zwei gegenüberliegenden Segmenten 21 mit Öffnungen 23 versehen. Diese Öffnungen 23 wirken mit entsprechenden Gegenöffnungen 22 im Filterboden 24 zusammen. Dabei sind die Gegenöffnungen 22 in drei nebeneinander liegenden Segmenten des Filterbodens 24 angeordnet. Das vierte Segment 25 ist geschlossen. Die Segmente werden durch senkrecht auf dem Filterboden 24 stehende Stege 26 gebildet. Das Segment 25 bildet durch seinen geschlossenen Boden einen Feuchtigkeitssumpf. Damit wird gewährleistet, daß das Filtergranulat, das gesilberte Kohle enthält, immer feucht gehalten wird, so daß die keimtötende Wirkung des Silbers zum Tragen kommt.

Die steckbare Kappe 20 bildet somit bei diesem Ausführungsbeispiel das Schließteil 27. Durch Umstecken der Kappe 20 können ein oder gleichzeitig zwei Segmente zum Wasserdurchfluß freigegeben werden, wodurch die Verweildauer des Wassers im Patronengehäuse 15 gesteuert wird. Ein weiteres Instrument zur Steuerung ist eine schwimmend gelagerte Verzögerungsplatte 28. Die Verzögerungsplatte 28 stützt sich auf Greifmulden 29 ab. Die Greifmulden 29 setzen sich in der Kappe 20 fort und definieren dadurch die Umsteckstellung für die unterschiedlichen Durchflußgeschwindigkeiten. Der Rand der Verzögerungsplatte 28 ist mit einer Rillung 30 zum Durchfluß des Wassers versehen.

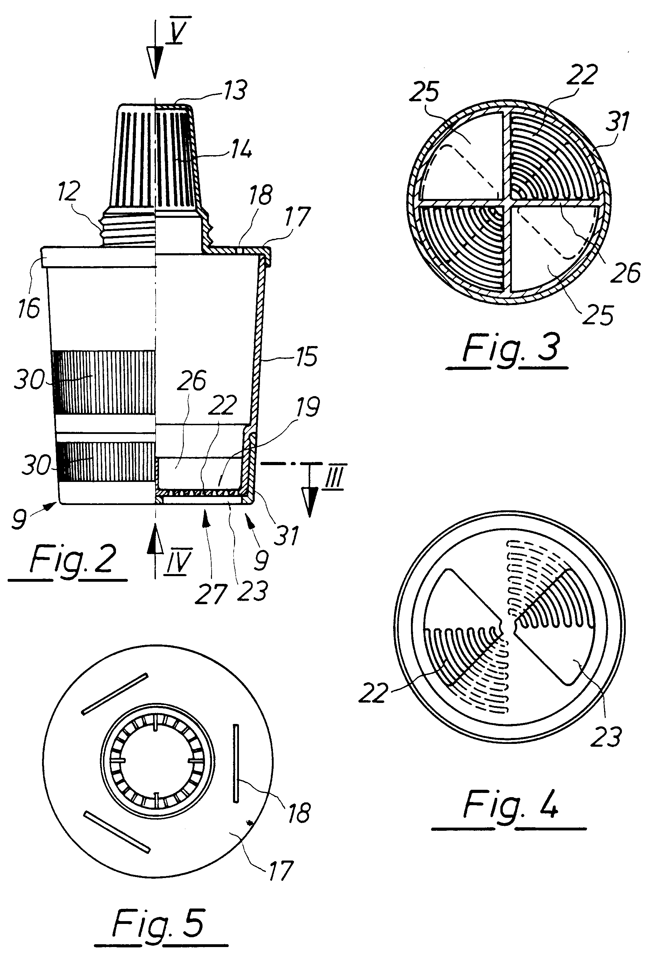

Nach den Figuren 2 bis 5 ist eine Filterpatrone 6 gezeigt, deren Schließteil 27 aus einer drehbaren Kappe 31 besteht.

Dadurch kann die Durchflußgeschwindigkeit stufenlos geregelt werden. Die Einteilung mittels Stege 26 in einzelne Segmente entspricht dem Ausführungsbeispiel gemäß Figur 1, 7 bis 8. Anstelle von Greifmulden ist eine Rillung 30 auf dem Patronengehäuse 15 und der drehbaren Kappe 31 vorgesehen.

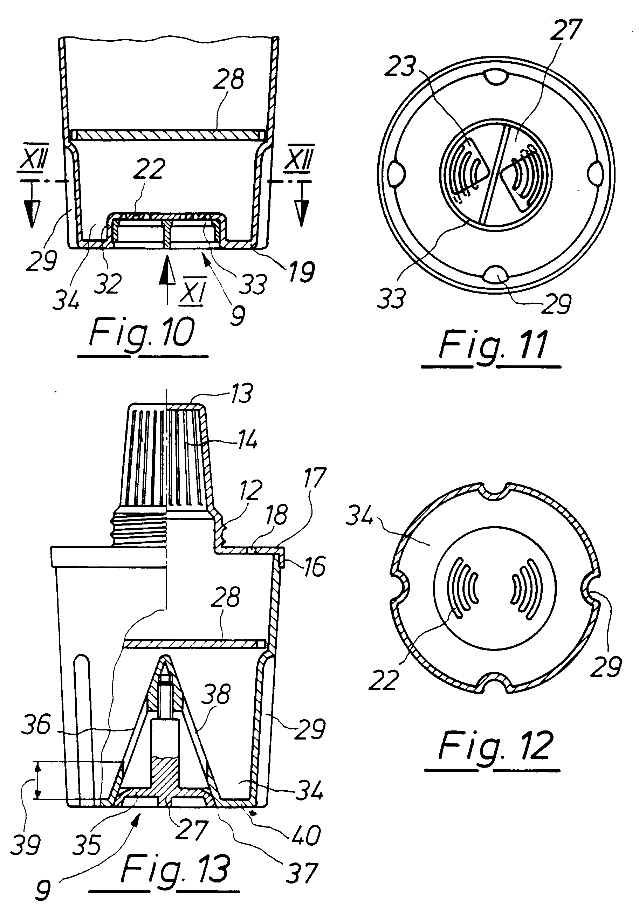

Gemäß den Figuren 10 bis 12 ist eine weitere Alternativlösung einer Filterpatrone dargestellt. Dabei besteht das Schließteil 27 aus einer in einem Bodeneinzug 32 drehbaren und/oder steckbaren Sperrscheibe 33. Die Sperrscheibe 33 und der Bodeneinzug 32 sind wiederum analog zu den vorab geschilderten Ausführungsbeispielen mit Öffnungen 22 und Gegenöffnungen 23 versehen. Der Feuchtigkeitssumpf wird in diesem Ausführungsbeispiel durch eine Ringkammer 34 gebildet.

Schließlich ist in Figur 13 eine weitere Variante einer Filterpatrone 6 gezeigt. Dabei besteht das Schließteil 27 aus einem einschraubbaren Sperrkegel 35, der in einen kegelförmigen Zentrumsbereich 36 mehr oder weniger weit einschraubbar ist und somit einen unterschiedlich breiten Durchlaufschlitz 37 freigibt. Die Auslaufschlitze 38 (Öffnungen) beginnen in einem Abstand 39 über dem Boden 40, so daß wiederum eine Ringkammer 34 für einen Feuchtigkeitssumpf entsteht.

## Patentansprüche

1. Haushaltswasserfilter mit einem über einem Auffangbehälter (8) angeordnetem Trichterteil (1), in das über eine Aufnahme (5) eine Filterpatrone (6), der eine Absperreinrichtung (9) zugeordnet ist, eingesetzt ist, dadurch gekennzeichnet, daß die Absperreinrichtung (9) im Bodenbereich (19) der Filterpatrone (6) angeordnet und zumindest für zwei Durchflußgeschwindgkeiten einstellbar ist.

2. Haushaltswasserfilter nach Anspruch 1, dadurch gekennzeichnet, daß in der Filterpatrone (6) etwa mittig quer zur Durchströmrichtung eine schwimmend gelagerte Verzögerungsplatte (28) vorgesehen ist.

3. Haushaltswasserfilter nach Anspruch 2, dadurch gekennzeichnet, daß die Filterpatrone (6) mit zumindest zwei Greifmulden, (29) auf denen die Verzögerungsplatte (28) abgestützt ist, versehen ist.

4. Haushaltswasserfilter nach einem der Ansprüche 1 bis 3, dadurch gekennzeichnet, daß die Absperreinrichtung (9) aus einem verstellbaren Schließteil (27) und aus in einem Teilbereich des Bodens der Filterpatrone (6) angeordneten, durch das Schließteil (27) zumindest teilweise verschließbaren Öffnungen (22) besteht.

5. Haushaltswasserfilter nach Anspruch 4, dadurch gekennzeichnet, daß der Boden der Filterpatrone (6) zumindest im Zentrumsbereich (36) kegelförmig eingezogen, und daß das Schließteil (27) als einschraubbarer Sperrkegel (35) ausgebildet ist.

6. Haushaltswasserfilter nach Anspruch 4, dadurch gekennzeichnet, daß der Boden aus Segmenten (25) mit unterschiedlichen Öffnungen (22) besteht, und daß das Schließteil (27) als dreh- und oder steckbare Kappe (20, 31) mit je nach Stellung unterschiedlich mit den Öffnungen (22) korrespondierenden Gegenöffnungen (23) ausgebildet ist.

7. Haushaltswasserfilter nach Anspruch 6, dadurch gekennzeichnet, daß am Boden senkrechte Stege (26) angeordnet sind, wobei ein Segment zur Bildung eines Feuchtigkeitssumpfes dicht ausgebildet ist.

## Claims

1. Domestic water filter having a funnel part (1) which is arranged above a storage container (8) and into which there is inserted, via a receiving means (5), a filter cartridge (6) to which there is assigned a shut-off device (9), characterized in that the shut-off device (9) is arranged in the base region (19) of the filter cartridge (6) and can be adjusted for at least two throughflow speeds.

2. Domestic water filter according to Claim 1, characterized in that a retardation float (28) which is mounted in a floating manner is provided approximately centrally in the filter cartridge (6), transversely with respect to the throughflow direction.

3. Domestic water filter according to Claim 2, characterized in that the filter cartridge (6) is provided with at least two recessed mouldings (29) on which the retardation float (28) is supported.

4. Domestic water filter according to one of Claims 1 to 3, characterized in that the shut-off device (9) comprises an adjustable closure part (27) and openings (22) which are arranged in a sub-region in the base of the filter cartridge (6) and can be at least partially closed by the closure part (27).

5. Domestic water filter according to Claim 4, characterized in that the base of the filter cartridge (6) is drawn in conically at least in the central region (36), and in that the closure part (27) is designed as a screw-in blocking cone (35).

6. Domestic water filter according to Claim 4, characterized in that the base comprises segments (25) with different openings (22), and in that the closure part (27) is designed as a rotatable and/or plug-in cap (20, 31) with counter-openings (23) which, depending on the position, correspond differently with the openings (22).

7. Domestic water filter according to Claim 6, characterized in that vertical webs (26) are arranged on the base, one segment being designed in a sealed manner in order to form a moisture sump.

## Revendications

1. Filtre à eau pour usage domestique comprenant une partie en entonnoir (1) disposée au-dessus d'un récipient de réception (8), entonnoir dans lequel est montée au-dessus d'un logement (5) une cartouche de filtrage (6) à laquelle est associé un dispositif de fermeture (9), caractérisé en ce que le dispositif de fermeture (9) est disposé dans la zone de fond (19) de la cartouche de filtrage (6) et peut être réglé pour au moins deux vitesses de passage.

2. Filtre à eau pour usage domestique selon la revendication 1, caractérisé en ce qu'une plaque de retardement (28) montée de façon flottante est prévue dans la cartouche de filtrage (6), sensiblement centralement et transversalement à la direction de l'écoulement.

3. Filtre à eau pour usage domestique selon la revendication 2, caractérisé en ce que la cartouche de filtrage (6) est munie d'au moins deux dépressions de saisie (29) sur lesquelles s'appuie la plaque de retardement (28).

4. Filtre à eau pour usage domestique selon l'une quelconque des revendications 1 à 3, caractérisé en ce que le dispositif de fermeture (9) est constitué par un élément de fermeture réglable (27) et par des ouvertures (22) pouvant être fermées au moins en partie par l'élément de fermeture (27) et disposées dans une zone partielle du fond de la cartouche de filtrage (6).

5. Filtre à eau pour usage domestique selon la revendication 4, caractérisé en ce que le fond de la cartouche de filtrage (6) comprend une partie en retrait de forme conique au moins dans la zone centrale (36), et en ce que l'élément de fermeture (27) est constitué sous forme d'un cône de fermeture vissable (35).

6. Filtre à eau pour usage domestique selon la revendication 4, caractérisé en ce que le fond est constitué par des segments (25) comprenant des ouvertures différentes (22), et en ce que l'élément de fermeture (27) est constitué sous forme d'un couvercle tournant et/ou enfonçable (20, 31) comprenant des contre-ouvertures (23) correspondant de façons diverses aux ouvertures (22) en fonction de sa position.

7. Filtre à eau pour usage domestique selon la revendication 6, caractérisé en ce que des nervures verticales (26) sont prévues dans le fond, un segment destiné à la formation d'un espace de réception d'humidité étant de constitution étanche.
